# FASCICULE DE BREVET EUROPEEN

(11) **EP 0 445 012 B1**
(45) Date de publication et mention de la délivrance du brevet: **22.12.1993**
(21) Numéro de dépôt: 91400491.6
(22) Date de dépôt: 22.02.1991
(51) Int. Cl.: F16F 1/36, B60K 5/12

(54) **Bloc élastique alvéolé pour le filtrage des vibrations, destiné notamment à supporter un ensemble moteur-boîte de vitesses dans un véhicule**
Zellenförmiger Gummiblock zur Schwingungsdämpfung, insbesondere zur Motorgetriebeeinheitslagerung in einem Kraftfahrzeug
Elastic cellular block for filtering of vibrations, especially designed for supporting the motor/gear-box assembly of a vehicle

(30) Priorité: 26.02.1990 FR 9002349
(43) Date de publication de la demande: 04.09.1991
(73) Titulaire: PAULSTRA GMBH, D-68060 Mannheim (DE)
(72) Inventeur: Spaltofski, Ralf, W-6700 Ludwigshafen (DE)
(74) Mandataire: Picard, Jean-Claude Georges

(56) Documents cités:
- EP-A- 0 187 888
- EP-A- 0 192 936
- EP-A- 0 320 608
- DE-A- 3 607 051
- DE-C- 4 002 357

## Description

La présente invention concerne un bloc élastique alvéolé pour le filtrage des vibrations, destiné notamment à supporter un ensemble moteur-boîte de vitesses dans un véhicule, ce bloc, de forme générale cylindrique, étant réalisé en caoutchouc ou en élastomère et comportant dans sa masse un certain nombre d'alvéoles, par exemple sphériques, dont ceux qui s'étendent dans le même plan transversal à l'axe du bloc sont reliés ou traversés par des passages pour les noyaux de moulage, ces passages débouchant sur la paroi latérale du bloc et étant étagés en nappes successives de sorte qu'ils ne se traversent pas entre eux. Un tel bloc est connu par le document EP-A-0 320 608.

Les blocs filtrants connus de ce type ont pour but d'amortir les vibrations qui peuvent être transmises de l'ensemble moteur-boîte de vitesses au véhicule. Les alvéoles ont pour but de conférer au bloc une grande souplesse, sans risque de fluage et avec une raideur aussi constante que possible en fonction de la charge. Les alvéoles ont en outre, en eux-mêmes, un rôle amortisseur des bruits.

Dans un bloc filtrant connu de ce type, les passages en question sont disposés en nappes croisées, à savoir qu'en projection sur un plan perpendiculaire à l'axe du bloc, ils apparaissent comme formant des croix situées entre les alvéoles.

Cette configuration résulte du fait que tous les passages d'une même nappe s'étendent dans une seule et même direction sur toute leur longueur, tandis que tous les passages de la nappe immédiatement suivante s'étendent tous dans une seule et même direction qui est perpendiculaire à la précédente, et ainsi de suite.

Quand on observe l'ensemble des alvéoles dans une projection sur un plan perpendiculaire à l'axe du bloc, on s'aperçoit qu'ils laissent entre eux d'importantes masses de caoutchouc plein. Le bloc a donc une homogénéité réduite.

Un autre inconvénient d'un tel bloc réside dans le fait qu'il nécessite des plans de joint de forme complexe pour le moule ; en effet, si l'on observe un seul et même quartier du bloc, on voit que lesdits passages des nappes successives débouchent à l'extérieur selon deux directions alternativement perpendiculaires l'une à l'autre. On ne peut trouver aucun quartier du bloc pour lequel ils débouchent à l'extérieur tous dans la même direction. Le bloc étant moulé en quatre quartiers, on voit en conséquence que les quarts de moule ne peuvent avoir un plan de joint de forme linéaire ; le plan de joint a une forme en créneaux.

Le but de la présente invention est de remédier à ces inconvénients de la technique antérieure, et en particulier d'obtenir un bloc filtrant du type général défini au début mais présentant un plus grand nombre d'alvéoles pour le même volume total du bloc, une meilleure homogénéité quant à la répartition de ces alvéoles dans le bloc, et enfin permettant de simplifier la forme des plans de joint du moule.

A cet effet, un bloc élastique alvéolé conforme à l'invention est caractérisé en ce que dans une seule et même nappe les premiers passages parallèles qui débouchent à l'extérieur sur les faces de deux quartiers diamétralement opposés du bloc ont la même direction, tandis que les seconds passages parallèles qui débouchent à l'extérieur sur les faces des deux autres quartiers diamétralement opposés du bloc ont une direction perpendiculaire à la précédente.

Cette disposition permet de résoudre facilement le problème des plans de joint du moule, qui pourront alors être linéaires. On comprendra mieux pourquoi à l'examen des figures.

Selon une autre disposition avantageuse de la présente invention, le bloc pourra encore être caractérisé en ce que lesdits premiers passages ont, par rapport auxdits seconds passages de la même nappe, une disposition telle qu'une rotation imaginaire de 90° selon l'axe du bloc les amènerait à s'intercaler mutuellement, et les alvéoles dans lesquels ils débouchent à s'imbriquer étroitement, et en ce que deux nappes immédiatement successives du bloc sont identiques quant à la disposition desdits passages et desdits alvéoles mais sont décalées l'une par rapport à l'autre (en projection sur un plan perpendiculaire à l'axe) d'un angle de 90° par une rotation sur l'axe du bloc.

On comprend que grâce à cette disposition particulièrement intéressante on obtiendra une plus grande densité d'alvéoles et une bien meilleure répartition de ces alvéoles dans tout le bloc et ceci, au surplus, sans croisement desdits passages.

Cela également sera rendu plus clair par les quelques explications fournies maintenant avec référence aux figures du dessin ci-annexé dans lequel :
- **la figure 1** est une vue en élévation d'un bloc filtrant conforme à l'invention ;
- **la figure 2** est une vue en coupe longitudinale par la ligne II-II de la figure 1 ;
- **la figure 3** est une vue en coupe transversale par la ligne III-III de la figure 1 ;
- **la figure 4** est une vue en coupe transversale par la ligne IV-IV de la figure 1 ;
- **la figure 5** est une vue en coupe longitudinale par la ligne V-V de la figure 4 ;
- **la figure 6** est une projection de l'ensemble des alvéoles sur un plan transversal à l'axe du bloc ; et
- **la figure 7** est une découpe correspondante, montrant uniquement la surface projetée du caoutchouc.

Sur les figures, le bloc est désigné en 1, les premiers passages en 2, les seconds passages en 3 et les alvéoles sphériques dans lesquels ils débouchent ou qu'ils traversent, respectivement en 4 et 5. Le passage axial du bloc 1 est référencé 6.

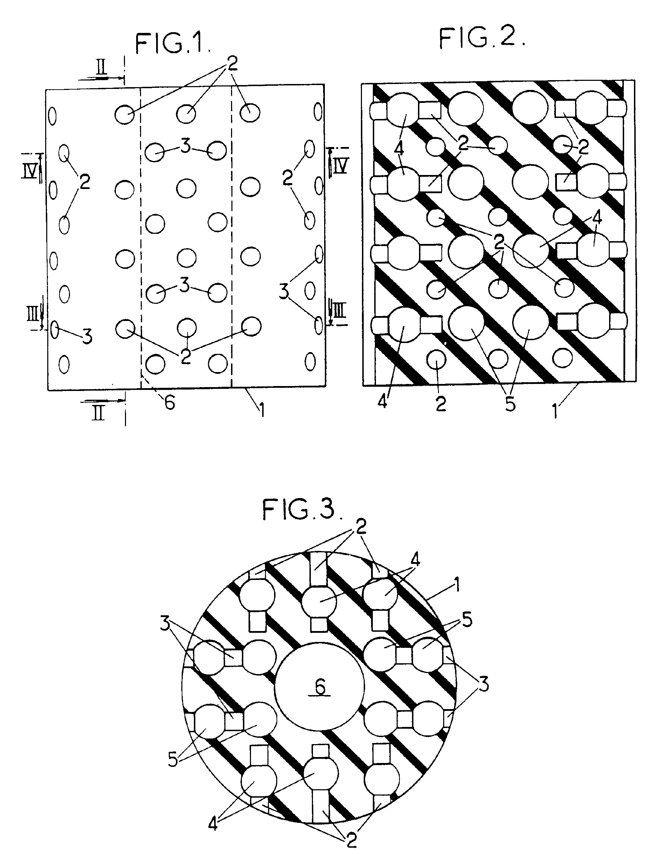

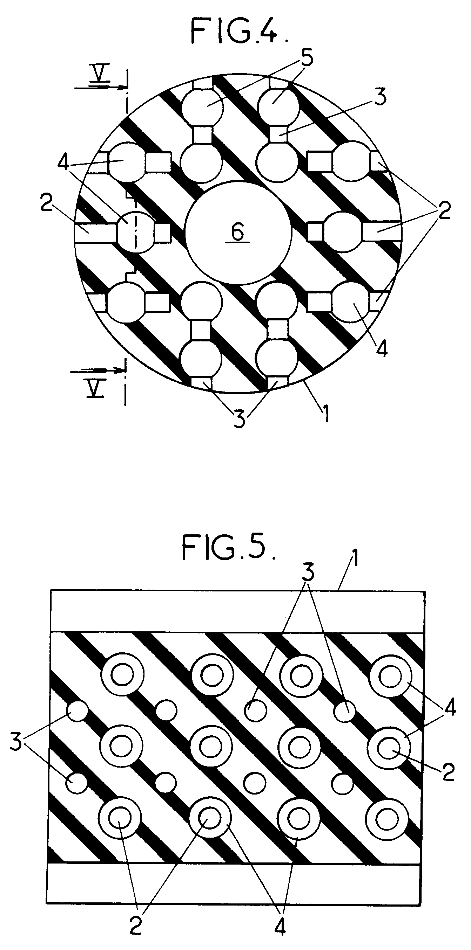

En comparant les figures 3 et 4, on voit que deux nappes consécutives de passages et d'alvéoles du bloc sont identiques mais décalées l'une de l'autre de 90° selon une rotation s'effectuant sur l'axe du bloc.

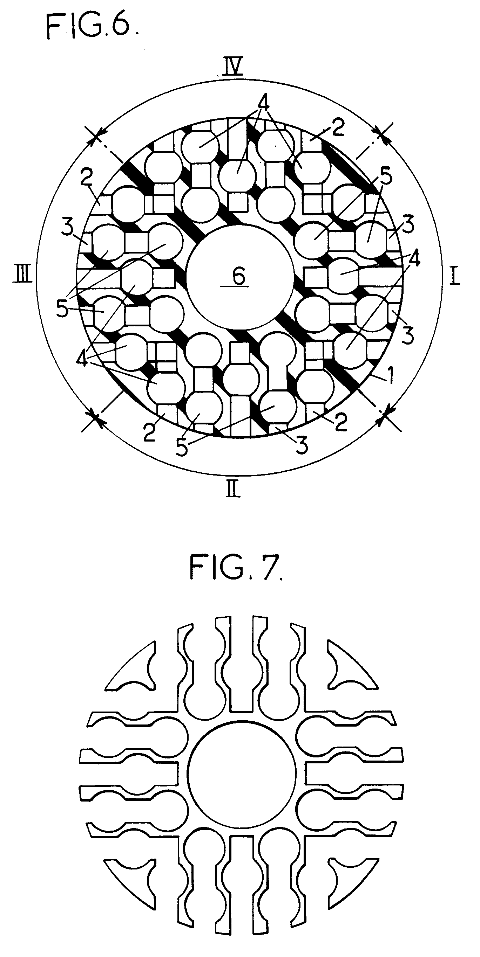

La vue en projection de la figure 6 montre qu'un décalage latéral judicieux entre les passages 2 d'une nappe (au nombre de trois dans chacun des deux quartiers diamétralement opposés du bloc) et les passages 3 de la nappe sous-jacente (au nombre de deux dans chacun des deux mêmes quartiers du bloc), de même qu'un décalage approprié des alvéoles sphériques correspondants 4 et 5, permet une imbrication mutuelle maximale de ces alvéoles, et laisse un volume minimal de caoutchouc ou d'élastomère, comme le montre bien la découpe de la figure 7 ; les alvéoles 4 et 5 sont répartis d'une façon extrêmement homogène dans tout le volume du bloc 1.

A titre d'information, la surface en projection des passages et des alvéoles sphériques peut être de 78% de la surface totale de la section transversale du bloc.

L'observation de la figure 6 fait aussi comprendre que le moulage du bloc 1 en quatre quartiers sera facilité, puisque l'on peut facilement diviser le bloc en quatre quartiers I - II - III- IV pour chacun desquels, tant les passages 2 que les passages 3 débouchent tous selon la même direction. Les plans de joint du moule pourront donc être linéaires.

Il est à noter également que grâce aux dispositions de l'invention les passages 2 et 3 sont sensiblement plus courts que ceux des blocs de la technique antérieure dont il a été fait état plus haut, ce qui facilitera l'extraction des noyaux. A cet effet, on pourrait également envisager d'élaborer des alvéoles non pas sphériques, mais en forme de goutte d'eau.

## Revendications

1. Bloc (1) élastique alvéolé pour le filtrage des vibrations, destiné notamment à supporter un ensemble moteur-boîte de vitesses dans un véhicule, ce bloc (1), de forme générale cylindrique, étant réalisé en caoutchouc ou en élastomère et comportant dans sa masse un certain nombre d'alvéoles (4, 5) dont ceux qui s'étendent dans le même plan transversal à l'axe du bloc (1) sont reliés ou traversés par des passages (2, 3) pour les noyaux de moulage, ces passages débouchant sur la paroi latérale du bloc (1) et étant étagés en nappes successives de sorte qu'ils ne se traversent pas entre eux, **caractérisé en ce que** dans une seule et même nappe, les premiers passages parallèles (2) qui débouchent à l'extérieur sur les faces de deux quartiers diamétralement opposés du bloc (1) ont la même direction, tandis que les seconds passages parallèles (3) qui débouchent à l'extérieur sur les faces des deux autres quartiers diamétralement opposés du bloc (1) ont une direction perpendiculaire à la précédente.

2. Bloc selon la revendication 1, caractérisé en ce que lesdits premiers passages (2) ont, par rapport auxdits seconds passages (3) de la même nappe, une disposition telle qu'une rotation imaginaire de 90° selon l'axe du bloc les amènerait à s'intercaler mutuellement, et les alvéoles (4, 5) dans lesquels ils débouchent à s'imbriquer étroitement, et en ce que deux nappes immédiatement successives du bloc sont identiques quant à la disposition desdits passages (2, 3) et desdits alvéoles (4, 5) mais sont décalées l'une par rapport à l'autre (en projection sur un plan perpendiculaire à l'axe) d'un angle de 90° par une rotation sur l'axe du bloc (1).

## Patentansprüche

1. Zellenförmiger, elastischer Block (1) zum Dämpfen von Schwingungen, insbesondere zum Abstützen der Motor-Getriebeeinheit eines Kraftfahrzeuges, der eine allgemein zylindrische Form hat, aus Kautschuk oder einem elastomeren Material besteht und innerhalb seiner Masse eine bestimmte Anzahl von Zellen (4, 5) enthält, von denen die Zellen, die sich in der gleichen Querebene zur Achse des Blockes (1) erstrecken, über Durchgänge (2, 3) für die Formkerne verbunden sind oder von diesen durchquert werden, wobei die Durchgänge an der Seitenwandung des Blockes (1) münden und in aufeinanderfolgenden Lagen oder Schichten derart gestuft angeordnet sind, daß sie sich gegenseitig nicht durchqueren, dadurch gekennzeichnet, daß in ein und derselben Schicht die ersten parallelen Durchgänge (2), die außen an den Oberflächen von zwei sich diametral gegenüberliegenden Vierteln des Blockes (1) münden, die gleiche Richtung haben, während die beiden parallelen Durchgänge (3), die außen an den Oberflächen der beiden anderen sich diametral gegenüberliegenden Viertel des Blockes (1) münden, eine zu der vorstehenden Richtung senkrecht verlaufende Richtung haben.

2. Elastischer Block nach Anspruch 1, dadurch gekennzeichnet, daß die ersten Durchgänge (2) in bezug auf die zweiten Durchgänge (3) der gleichen Schicht so angeordnet sind, daß eine gedachte Drehung von 90° um die Achse des Blockes dazu führen würde, daß sich die Durchgänge gegenseitig ineinanderfügen und daß sich die Zellen (4, 5), in die sie münden, eng verschachteln und daß die beiden unmittelbar aufeinanderfolgenden Schichten des Blockes bezüglich der Anordnung der Durchgänge (2, 3) und der Zellen (4, 5) identisch, jedoch zueinander (in einer Projektion auf eine senkrecht zur Achse verlaufende Ebene gesehen) um einen Drehwinkel von 90° um die Achse des Blockes (1) verschoben sind.

## Claims

1. Cellular elastic block (1) for filtering vibrations, intended in particular to support a motor/gearbox assembly in a vehicle, this block (1), cylindrical in shape overall, being made from rubber or elastomer and having in its body a number of cells (4, 5), of which those which lie in the same plane transverse to the axis of the block (1) are connected by passages (2, 3) for the moulding cores, or have such passages passing through them, these passages opening out on the side wall of the block (1) and being staged in successive layers so that they do not pass through each other, characterised in that, in any one layer, the first parallel passages (2) which open to the outside on the faces of two diametrically opposed quarters of the block (1) have the same direction, whilst the second parallel passages (3) which open to the outside on the faces of the other two diametrically opposed quarters of the block (1) have a direction perpendicular to the previous one.

2. Block according to Claim 1, characterised in that the said first passages (2) have, with respect to the said second passages (3) in the same layer, an arrangement such that an imaginary rotation of 90° about the axis of the block would result in their being mutually interposed and in the cells (4, 5) into which they open out overlapping closely, and in that two immediately successive layers of the block are identical with regard to the arrangement of the said passages (2, 3) and cells (4, 5) but are offset with respect to one another (in projection onto a plane perpendicular to the axis) by an angle of 90° by rotation on the axis of the block (1).
